# EUROPÄISCHE PATENTSCHRIFT

(11) **EP 0 717 671 B1**
(45) Veröffentlichungstag und Bekanntmachung des Hinweises auf die Patenterteilung: **05.11.1997**
(21) Anmeldenummer: 94921641.0
(22) Anmeldetag: 12.07.1994
(51) Int. Cl.: B23B 29/034

(54) **WERKZEUGKOPF, INSBESONDERE PLANDREHKOPF**
TOOL HEAD, IN PARTICULAR A FACING-TOOL HEAD
TETE D'OUTIL, NOTAMMENT TETE D'OUTIL DE SURFACAGE

(30) Priorität: 11.09.1993 DE 4330903; 21.06.1994 DE 4421583
(43) Veröffentlichungstag der Anmeldung: 26.06.1996
(73) Patentinhaber: KOMET Präzisionswerkzeuge Robert Breuning GmbH, D-74354 Besigheim (DE)
(72) Erfinder: SCHEER, Gerhard, D-74369 Löchgau (DE)
(74) Vertreter: Wolf, Eckhard, Dr.-Ing.
(86) Internationale Anmeldenummer: EP9402271
(87) Internationale Veröffentlichungsnummer: WO9507160

(56) Entgegenhaltungen:
- DE-A- 3 410 967
- DE-U- 9 015 853
- FR-A- 2 545 395
- FR-A- 2 546 091

## Beschreibung

Die Erfindung betrifft einen Werkzeugkopf, insbesondere einen Plan- oder Ausdrehkopf, mit einem an der Spindel einer Werkzeugmaschine befestigbaren Grundkörper, mit mindestens einem im wesentlichen quer zur Spindelachse am Grundkörper verschiebbaren, mindestens eine Werkzeugaufnahme mit Spannmechanismus zum Einspannen eines Schneidwerkzeugs oder eines Werkzeughalters aufweisenden Arbeitsschieber, mit einem eine zentral durch die hohl ausgebildete Spindel hindurch in den Grundkörper eingreifende, axial verschiebbare Stellstange und die Axialbewegung der Stellstange in eine Querbewegung des Arbeitsschiebers umsetzende Getriebemittel aufweisenden, maschinenseitig betätigbaren Verstellmechanismus.

Bei einem bekannten, als Plandrehkopf ausgebildeten Werkzeugkopf mit den vorstehenden Merkmalen (DE-C-26 08 930) weist der Verstellmechanismus eine koaxial zur Spindelachse verschiebbar angeordnete Stellstange mit an zwei diametral gegenüberliegenden Seiten angeordneten, radial nach außen weisenden Schrägverzahnungen auf, während am Arbeitsschieber und einem als Gegengewicht dienenden Ausgleichsschieber je zwei symmetrisch zur Stellstange angeordnete, radial nach innen weisende Zahnleisten vorgesehen sind, die mit den Schrägverzahnungen der Stellstange kämmen. Die Zähne an den Zahnleisten des Arbeitsschiebers verlaufen dabei entgegengesetzt zu den der Zahnleisten des Ausgleichsschiebers. Zur Betätigung der Stellstange ist eine eigens hierfür konstruierte, maschinenseitig betätigbare Planzugeinrichtung vorgesehen, die zentral durch die Maschinenspindel hindurchgreift. Aufgrund ihrer achsnahen Anordnung sind die Schrägverzahnungen relativ kleinflächig, was sich sowohl beim Gleitverhalten zwischen Stellstange und Schieber als auch bei der Stellgenauigkeit nachteilig auswirkt.

Weiter ist es bei einem als Tieflochbohrer ausgebildeten Werkzeugkopf an sich bekannt (DE-A 34 10 967), eine durch den hohl ausgebildeten Grundkörper hindurchgreifende zentrale Stellstange vorzusehen, die zur radialen Verstellung von Schneidkörpern mehrere außermittige, achsparallel ausgerichtete und im Grundkörper axial geführte Getriebestangen trägt. Die Getriebestangen weisen nach einer Seite gerichtete Schrägverzahnungen auf, die mit komplementären Schrägverzahnungen der Schneidkörper in Eingriff stehen. Die Stellstange ist dort massiv ausgebildet.

Ausgehend hiervon liegt der Erfindung die Aufgabe zugrunde, einen Werkzeugkopf der eingangs angegebenen Art zu entwickeln, der einen günstigen Kraftangriff zwischen Stellstange und Schieber und damit ein günstiges Gleitverhalten und eine hohe Stellgenauigkeit gewährleistet und der zudem weitere Betätigungsmöglichkeiten im Bereich zwischen den Getriebestangen ermöglicht.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung unterscheidet sich vom vorbekannten Stand der Technik im wesentlichen durch zwei einander diametral gegenüberliegende Getriebestangen und durch eine hohl ausgebildete Stellstange. Diese Merkmale bewirken einen günstigen Kraftangriff zwischen Stellstange und Schieber, wobei Raum für weitere Betätigungsmöglichkeiten im Bereich zwischen den Getriebestangen bleibt.

Die Getriebestangen können dabei zusätzlich mit den radial nach außen weisenden Schrägverzahnungen mindestens eines in Gegenrichtung des Arbeitsschiebers verschiebbaren Ausgleichschiebers in Eingriff stehen. Die Masse des Arbeitsschiebers und des Ausgleichsschiebers und deren Hubweg sind so aufeinander abgestimmt, daß ein Wuchtausgleich in jeder Schieberstellung gewährleistet ist.

Um die bei der Betätigung der Schieber an den Getriebestangen auftretenden Drehmomente besser aufnehmen zu können, sind die Getriebestangen zumindest an ihrem schieberseitigen Ende plattenförmig verbreitert, wobei zumindest ein Teil der Schrägverzahnungen auf der radial nach innen weisenden Breitseite der plattenförmig verbreiterten Getriebestangenteile angeordnet sind. Sowohl in konstruktiver als auch in funktioneller Hinsicht hat es sich als besonders vorteilhaft erwiesen, wenn die Stellstange mit einem Hohlschaft und einem am grundkörperseitigen Ende des Hohlschafts radial überstehenden, in eine Axialführung des Grundkörpers eingreifenden Bund versehen ist und die Getriebestangen auf der dem Hohlschaft gegenüberliegenden Seite des Bunds einander diametral gegenüberliegend und achsparallel überstehend am Bund befestigt, vorzugsweise angeschraubt sind.

Aufgrund der außermittig angeordneten Getriebestangen ist es möglich, die Stellstange hohl auszubilden, so daß eine durch die Stellstange zentral hindurchgreifende, maschinenseitig betätigbare Betätigungsstange zur Herstellung einer Wirkverbindung mit weiteren Funktionselementen im Werkzeugkopf vorgesehen werden kann. Beispielsweise ist es im Interesse einer Komplettbearbeitung von Werkstücken in einer Aufspannung von großem Vorteil, wenn Plandrehköpfe auch in Bearbeitungszentren mit automatischem Werkzeugwechsel eingesetzt werden können. Dem stand bisher entgegen, daß der zentrale Bereich der Maschinenspindel durch die Planzugeinrichtung für das Werkzeug belegt war, so daß dort ein zusätzlicher Betätigungsmechanismus nicht untergebracht werden konnte.

Bei Verwendung einer hohlen Stellstange für die Schieberverstellung kann nun eine durch die Stellstange zentral hindurchgreifende, maschinenseitig betätigbare und innerhalb des Grundkörpers mit dem Spannmechanismus lösbar kuppelbare Betätigungsstange vorgesehen werden, mit der ein maschinenseitig auslösbarer automatischer Werkzeugwechsel vorgenommen werden kann.

Nach einer bevorzugten Ausgestaltung der Erfindung trägt die Betätigungsstange an ihrem schieberseitig durch die hohle Stellstange hindurchgreifenden Ende ein vorzugsweise klauenartiges Kupplungselement, das mit einem komplementären schieberseitig angeordneten, mit dem Spannmechanismus verbundenen Kupplungselement vorzugsweise in einer Mittelstellung des Schiebers kuppelbar ist. Um die Betätigungsstange axial zustellen und in Drehrichtung unter Auslösung einer Werkzeugwechsels betätigen zu können, ist die Betätigungsstange im Bereich ihres schieberseitig durch die hohle Stellstange hindurchgreifenden Endes in einer mit der Stellstange fluchtenden grundkörperfesten Führungs- und Lagerbüchse in Kupplungsrichtung axial geführt und drehgelagert. Die Führungs- und Lagerbüchse weist zu diesem Zweck ein vorzugsweise als Nadellager ausgebildetes Wälzlager für die Betätigungsstange auf. Zwischen der Führungs- und Lagerbüchse einerseits und dem schieberseitigen Kupplungselement andererseits kann ein axialer Freiraum zur Aufnahme des Kupplungselements der Betätigungsstange in ausgekuppelter Ruhestellung vorgesehen werden.

Eine weitere bevorzugte Ausgestaltung der Erfindung sieht vor, daß der Spannmechanismus einen im Schieber um eine zur Spindelachse parallele Achse axial unverschiebbar gelagerten, das schieberseitige Kupplungselement tragenden Drehteller aufweist, dessen Drehbewegung über einen Gewindetrieb in eine radiale Spannbewegung von innerhalb der Werkzeugaufnahme in einen Hohlschaft des Werkzeugs oder des Werkzeughalters eingreifenden Spannorganen umsetzbar ist. Um die an der Betätigungsstange angreifenden Kräfte reibungsarm auf die Spannorgane übertragen zu können, ist der Drehteller innerhalb des Arbeitsschiebers zweckmäßig in axialen Wälzlagern gelagert. Eine weitere Verbesserung in dieser Hinsicht und zur Erleichterung des Kupplungsvorgangs weist der Drehteller auf der Seite der Betätigungsstange einen achszentralen Zentrierstift für die Betätigungsstange und mindestens zwei exzentrische, achsparallel überstehende Kupplungsklauen auf.

Eine besonders zuverlässige Betätigung des Spannmechanismus kann dadurch erzielt werden, daß der Drehteller einen axial überstehenden Gewindezapfen trägt, der in ein Innengewinde einer radial innerhalb der Spannorgane angeordneten, zentral durch die Werkzeugaufnahme drehfest hindurchgreifenden, axial verschiebbaren, mit mantelseitigen Kegelflächen gegen innenseitige Keilflächen der Spannorgane einwirkenden Spannhülse eingreift. Als Spannorgane sind dabei zweckmäßig mehrere in Umfangsrichtung einen Winkelabstand voneinander aufweisende, achsparallel ausgerichtete Zangensegmente vorgesehen, die mit außenseitigen, axial einander entgegengesetzt ausgerichteten Keilflächen gegen entsprechende Innenkonusflächen des Werkzeughohlschafts und des Arbeitsschiebers unter axialer und radialer Einspannung des Werkzeughalters in der Werkzeugaufnahme abgestützt sind. Die Werkzeugaufnahme kann dabei eine zylindrische, doppelzylindrische oder konische Innenfläche zur Aufnahme eines Werkzeughohlschafts mit komplementärer Mantelfläche aufweisen.

Zur Verbesserung der Spanabfuhr und Kühlung beim Bearbeitungsvorgang hat es sich als zweckmäßig erwiesen, wenn ein Kühlschmierstoff direkt an die Schneide geführt wird. Um dies zu ermöglichen, wird gemäß einer vorteilhaften Ausgestaltung der Erfindung vorgeschlagen, daß im Grundkörper mindestens ein über eine Spindelbohrung mit Kühlschmierstoff beaufschlagbarer Kühlschmierstoffkanal vorgesehen ist, der über ein radial ausgerichtetes, flüssigkeitsdichtes Teleskoprohr in einen zur Werkzeugaufnahme führenden und über diese an einen Werkzeugkanal anschließbaren Schieberkanal mündet.

Um die Werkzeugaufnahme sauber zu halten und dort vorhandene Späne und Schmutzpartikel bei einem Wechselvorgang zu entfernen, hat es sich als vorteilhaft erwiesen, wenn im Grundkörper ein vorzugsweise über eine Spindelbohrung mit Druckluft beaufschlagbarer Druckluftkanal vorgesehen ist, der in der Mittelstellung des Arbeitsschiebers mit einem schieberseitigen, in das Innere der Werkzeugaufnahme mündenden Blasluftkanal kommuniziert. Damit kann sowohl beim Spannvorgang als auch beim Auswurfvorgang Blasluft austreten, die die Werkzeugaufnahme sauber hält.

Um für umfangreiche Zerspanungsaufgaben verschiedene Werkzeuge am Werkzeugkopf unabhängig voneinander verschieben zu können, wird gemäß einer bevorzugten Ausgestaltung der Erfindung vorgeschlagen, daß am Grundkörper neben dem ersten Arbeitsschieber ein im wesentlichen quer zur Spindelachse verschiebbarer, mindestens eine Werkzeugaufnahme aufweisender zweiter Arbeitsschieber angeordnet ist, und daß die durch die hohle Stellstange hindurchgreifende, innerhalb des Grundkörpers axial geführte Betätigungsstange über die Axialbewegung der Betätigungsstange in eine Querbewegung des zweiten Arbeitsschiebers umsetzende zweite Getriebemittel mit dem zweiten Arbeitsschieber kuppelbar ist. Obwohl grundsätzlich jede gegenseitige Verschieberichtung möglich ist, ist es zweckmäßig, wenn der erste und der zweite Arbeitsschieber parallel zueinander am Grundkörper verschiebbar sind.

Vorteilhafterweise sind die zweiten Getriebemittel durch zwei in der Nähe des stirnseitigen Endes auf einander diametral gegenüberliegenden Seiten der Betätigungsstange radial nach außen weisende Schrägverzahnungen und zwei am zweiten Arbeitsschieber symmetrisch zur Betätigungsstange angeordnete, radial nach innen weisende, mit den Schrägverzahnungen der Betätigungsstange kämmende Zahnleisten gebildet.

Die erfindungsgemäßen, außermittig im Grundkörper angeordneten Getriebestangen können mit ihren nach innen weisenden Schrägverzahnungen auch mit je einem von zwei in Gegenrichtung parallel zueinander am Grundkörper verschiebbaren, durch eine Zentraldurchführung quer zu ihrer Verschieberichtung voneinander getrennten Arbeitsschiebern in Eingriff stehen. Die Stellstange kann dabei eine durch die Zentraldurchführung axial zugängliche Werkzeugaufnahme beispielsweise für eine Pinole oder ein Bearbeitungswerkzeug aufweisen. Die Werkzeugaufnahme ihrerseits kann mit einem radial durch eine vorzugsweise selbsttätig flüssigkeitsdicht verschließbare Öffnung des Grundkörpers hindurch mittels eines Schraubwerkzeugs zugänglichen Spannmechanismus versehen sein. Bei einer mit einem radialen Bund zur außermittigen Befestigung der Getriebestangen versehenen Stellstange kann zusätzlich ein durch den Bund hindurchgreifender Radialkanal für den Zugriff zum Spannmechanismus der Werkzeugaufnahme vorgesehen werden. Die Stellstange kann auch bei dieser Ausgestaltung als Hohlschaft ausgebildet werden, dessen Axialbohrung von einer mit einer Kühlmittelbohrung durchsetzten starr montierten Dichtstange oder verschiebbaren Betätigungsstange bestückt sein kann.

Zur Verbesserung der Bearbeitungsgenauigkeit des Werkzeugs ist es vor allem für die Feinbearbeitung von Vorteil, wenn die Getriebestangen und/oder die Schieber zumindest an ihren von den Schrägverzahnungen abgewandten Führungsflächen über vorgespannte Wälzführungen am Grundkörper abgestützt sind und dadurch reibungs- und spielarm geführt werden. Um bei größeren Werkzeugbelastungen auch die Vorteile einer Gleitführung zu nutzen und das Dämpfungsverhalten zu verbessern, wird gemäß einer bevorzugten Ausgestaltung der Erfindung vorgeschlagen, daß die Getriebestangen und/oder die Schieber zumindest an ihren den Schrägverzahnungen abgewandten Führungsflächen über kombinierte Wälz- und Gleitführungen am Grundkörper abgestützt sind, wobei die einander zugewandten Gleitführungsflächen nur bei Überschreiten einer vorgegebenen Querbelastung und elastischen Verformung der Wälzführungen gegeneinander anliegen.

Eine weitere vorteilhafte Ausgestaltung der Erfindung sieht vor, daß der Arbeitsschieber eine Werkzeugaufnahme mit Planflächenverspannung aufweist, deren Achse im Abstand von der Spindelachse quer zu dieser ausgerichtet ist und deren Planfläche parallel zu einer die Spindelachse enthaltenden Mittelebene im Abstand von dieser angeordnet ist, wobei die Planfläche zweckmäßig parallel zur Verschieberichtung des Arbeitsschiebers ausgerichtet ist. Mit dieser Anordnung ist es möglich, die Werkzeugaufnahme so mit einem Schneidwerkzeug zu bestücken, daß die beim Plandrehen und Einstechen an seiner Schneide auftretende Hauptschnittkraft quer zur Planfläche gerichtet ist. Damit läßt sich ein optimaler Kraftfluß und somit ein optimales Bearbeitungsergebnis erzielen.

Zur Erhöhung der Bearbeitungsgenauigkeit ist es von Vorteil, wenn der Arbeitsschieber und der Grundkörper mit einem Maßstab und einem Sensor zur direkten Verschiebemessung bestückt sind.

Im folgenden wird die Erfindung anhand der in der Zeichnung in schematischer Weise dargestellten Ausführungsbeispiele näher erläutert. Es zeigen
- Fig. 1: einen Längsschnitt durch einen Plandrehkopf mit maschinenseitig betätigbarem Schieber und maschinenseitig betätigbarer Werkzeugaufnahme;
- Fig. 2: einen weiteren, um 90° gegenüber Fig. 1 gedrehten Längsschnitt durch den Plandrehkopf;
- Fig. 3: eine Draufsicht auf den Plandrehkopf;
- Fig. 4: einen Schnitt entlang der Schnittlinie 4-4 der Fig. 3;
- Fig. 5: einen Schnitt entlang der Schnittlinie 5-5 der Fig. 1;
- Fig. 6: einen Längsschnitt durch einen abgewandelten Plandrehkopf mit zwei unabhängig voneinander maschinenseitig betätigbaren Arbeitsschiebern;
- Fig. 7a: eine Draufsicht auf eine weitere abgewandelte Ausführungsform eines Plandrehkopfs mit Doppelschieber und Zentraldurchführung;
- Fig. 7b bis d: verschiedene Schnitte durch den Plandrehkopf entlang den Schnittlinien B-B, C-C und D-D der Fig. 7a;
- Fig. 8: einen Plandrehkopf mit Doppelschieber, Zentraldurchführung und zentraler Betätigungsstange mit Werkzeugaufnahme in einer Darstellung entsprechend Fig. 7d.

Die in der Zeichnung dargestellten Plandrehköpfe bestehen im wesentlichen aus einem Grundkörper 10, je einem im Grundkörper quer zur Grundkörperachse 12 gemeinsam nach entgegengesetzten Richtungen verschiebbaren Arbeitsschieber 14 und Ausgleichschieber 16 und einem eine Stellstange 18 und zwei Getriebestangen 20 aufweisenden Verstellmechanismus zum Verschieben der Schieber 14,16, sowie mindestens einer am Arbeitsschieber 14 angeordneten, durch einen als Langloch ausgebildeten Durchbruch 22 des Grundkörpers 10 stirnseitig hindurchgreifenden Werkzeugaufnahme 24 mit einem integrierten Spannmechanismus 26 für einen Werkzeughalter 28.

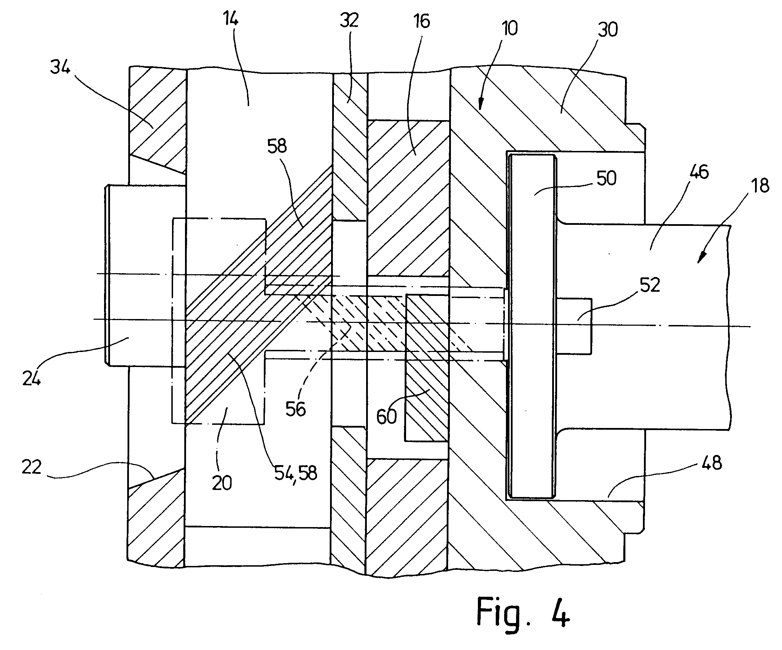

Aus Montagegründen ist der Grundkörper 10 im wesentlichen aus drei Teilen zusammengesetzt, einem Gehäuseteil 30, einem Zwischenlager 32 und einem den Durchbruch 22 enthaltenden Deckelteil 34, die in zusammengebautem Zustand mittels Schrauben 36,38 und Stiften 40 starr miteinander verbunden sind. Der Grundkörper 10 weist an seinem Gehäuseteil 30 einen Flansch 42 zur Befestigung an einer Maschinenspindel 44 mittels Flanschschrauben 45 auf. Die Maschinenspindel 44 weist einen zentralen Hohlraum für den Durchgriff der maschinenseitig betätigbaren Stellstange 18 auf. Die Stellstange 18 ihrerseits weist hierzu einen in die Spindel 44 in Richtung Werkzeugmaschine hindurchgreifenden Hohlschaft 46 für den Anschluß an ein maschinenseitiges Zugorgan sowie einen in einer maschinenseitig offenen Ausnehmung 48 des Grundkörpers 10 geführten, radial über den Hohlschaft 46 überstehenden Bund 50 auf. Die exzentrisch angeordneten, einander diametral gegenüberliegenden Getriebestangen 20 sind auf der dem Hohlschaft 46 gegenüberliegenden Seite des Bunds 50 mittels Schrauben 52 befestigt und in entsprechenden Ausnehmungen des Grundkörpers 10 axial geführt. Wie aus Fig. 4 zu ersehen ist, weisen die Getriebestangen 20 einen im wesentlichen T-förmigen Umriß auf und tragen an ihren radial nach innen weisenden Breitseitenflächen jeweils zwei nach einander entgegengesetzten Seiten weisende Schrägverzahnungen 54,56 auf, die mit komplementären, radial nach außen weisenden Schrägverzahnungen 58,60 im Arbeitsschieber 14 und im Ausgleichsschieber 16 kämmen. Damit wird erreicht, daß bei einer axialen Verstellung (Doppelpfeil 18') der Stellstange 18 der Arbeitsschieber 14 und der Ausgleichsschieber 16 nach entgegengesetzten Richtungen (Pfeile 14',16') innerhalb des Grundkörpers 10 verschoben werden.

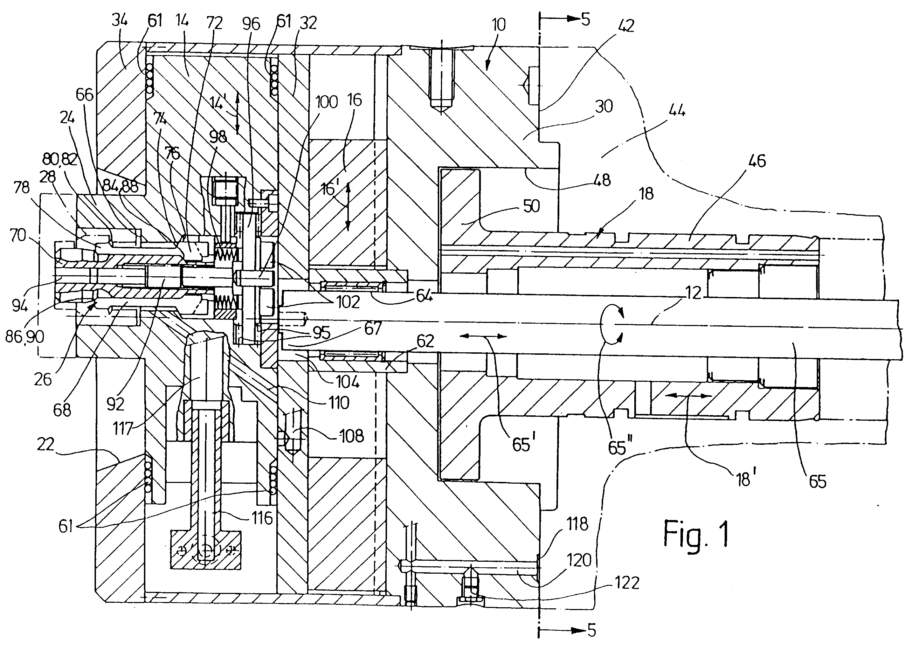

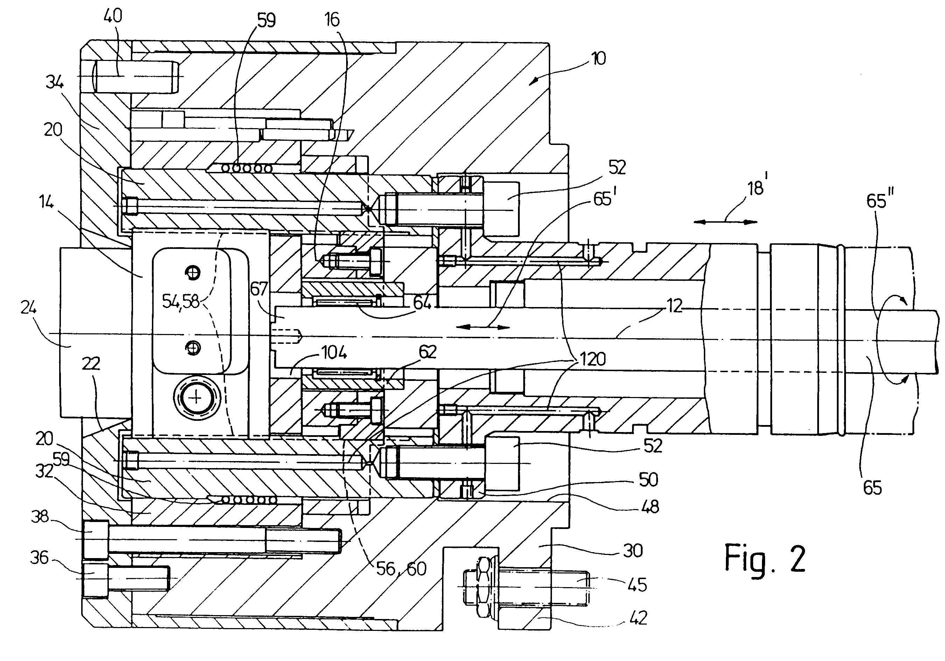

Zur Verbesserung der Bearbeitungsgenauigkeit sind bei den in Fig. 1, 2 sowie 7a und d gezeigten Ausführungsbeispielen die Getriebestangen 20 und die Arbeitsschieber 14 an ihren von den Schrägverzahnungen 58, 60 abgewandten Führungsflächen über Wälzführungen 59, 61, 61', 61'' am Grundkörper 10, 32, 34 abgestützt. Außerhalb der Wälzführungen 59, 61, 61', 61'' können zusätzlich Gleitführungen vorgesehen werden, die mit einem kleinen Spiel von ca. 2 µm bei leichter Belastung sich an ihren Führungsflächen noch nicht berühren. Wenn bei Belastungen die Wälzführungen 59, 61, 61', 61'' geringfügig verformt werden, kommen diese Gleitführungen zum Tragen. Bei dieser Lösung werden die Vorteile der Wälzführungen und Gleitführungen gleichermaßen ausgenutzt und das Dämpfungsverhalten verbessert.

Im Grundkörper 10 ist in axialem Abstand von der Stellstange 18 eine zur Grundkörperachse 12 koaxiale Führungs- und Lagerbüchse 62 mit einem Nadellager 64 eingebettet, die zur Führung und Abstützung einer von der Maschinenseite her durch die hohle Stellstange 18 hindurch in den Grundkörper eingreifende Betätigungsstange 65 bestimmt ist.

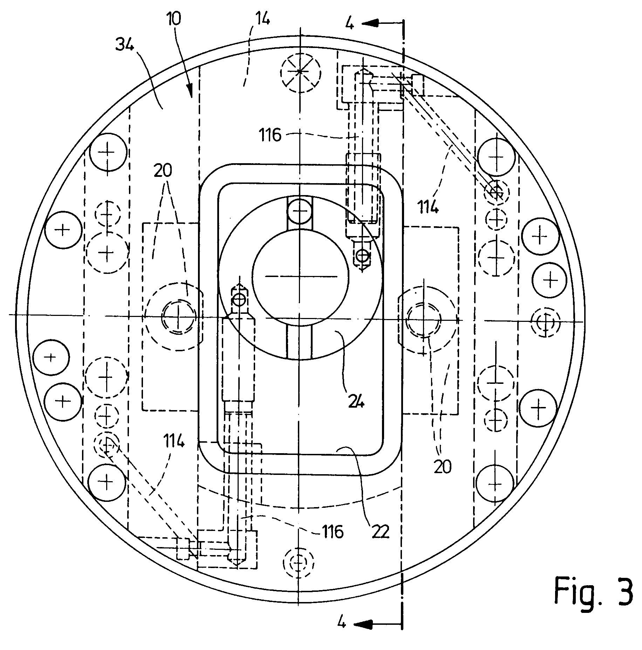

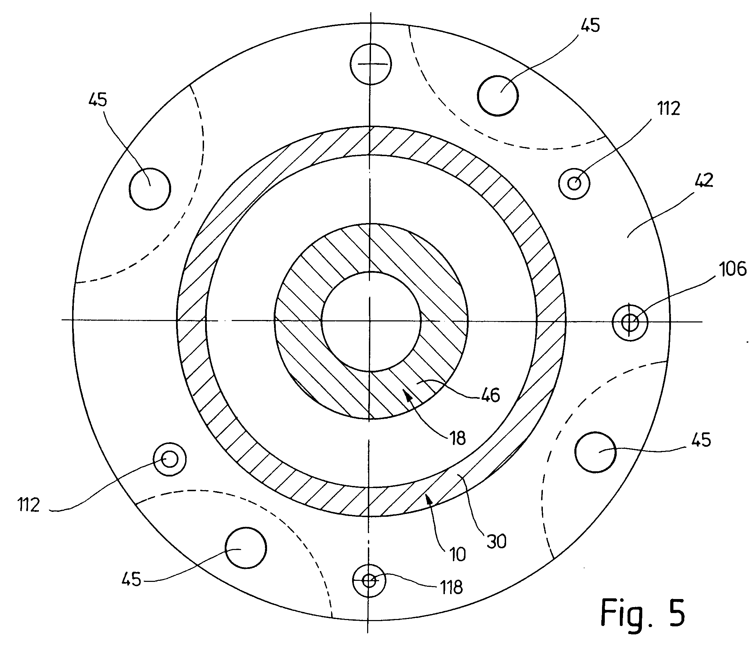

Bei dem in Fig. 1 bis 5 gezeigten Ausführungsbeispiel ist die Betätigungsstange 65 zu Betätigung des Spannmechanismus 26 bestimmt. Der im Arbeitsschieber 14 angeordnete Spannmechanismus 26 weist dazu mehrere, in Umfangsrichtung einen Abstand voneinander aufweisende, achsparallel ausgerichtete, durch den Boden 66 der Werkzeugaufnahme 24 hindurchgreifende Zangensegmente 68 sowie eine radial innerhalb der Zangensegmente 68 angeordnete Spannhülse 70 auf. Die Zangensegmente 68 weisen an ihrem einen Ende 72 je eine durch einen keilförmigen oder konischen Flächenabschnitt gebildete Spannfläche 74 auf, die sich an einer konischen Spannflanke 76 des Arbeitsschiebers 14 abstützen. An ihrem anderen, in die Werkzeugaufnahme 24 eingreifenden Ende 78 sind die Zangensegmente 68 mit einer durch einen entgegengesetzt gerichteten konischen Flächenabschnitt gebildeten Spannfläche 80 versehen, die gegen eine konische Spannflanke 82 im Werkzeughohlschaft 28 anpreßbar ist. Zum Einspannen des Werkzeugs werden die Zangensegmente 68 bei in die Werkzeugaufnahme 24 eingeführtem Hohlschaft 28 radial nach außen bewegt und mit ihren konischen Spannflächen 74,80 unter axialer und radialer Verspannung des Hohlschafts 28 in der Werkzeugaufnahme 24 auf die konischen Spannflanken 76,82 aufgeschoben. Die Betätigung erfolgt mit Hilfe der Spannhülse 70, deren Mantelfläche zwei im Abstand voneinander angeordnete Spannkegel 84,86 aufweist, die bei einer Axialverschiebung der Spannhülse 70 auf entsprechenden Schrägflächen 88,90 der Zangensegmente 68 auflaufen.

Die Verschiebung der Spannhülse 70 erfolgt mit Hilfe einer in ein Innengewinde der Spannhülse 70 eingreifenden Gewindestange 92, die über einen im Arbeitsschieber 14 um die Achse 94 koaxial zur Spannhülse 70 in Rollenlagern 95 drehbar gelagerten Drehteller 96 betätigbar ist. Das Einspannen erfolgt gegen die Kraft der Rückholfedern 98, die auch als Tellerfederpaket ausgebildet werden können. Der Drehteller 96 weist einen zur Maschinenseite hin überstehenden Zentrierstift 100 sowie Kupplungsklauen 102 auf, mit denen die maschinenseitige Betätigungsstange 65 durch axiale Zustellung stirnseitig kuppelbar ist.

Um die Kupplung vornehmen zu können, muß der Arbeitsschieber 14 zunächst in seine Mittelposition verschoben werden, in der die Achse 94 der Werkzeugaufnahme mit der Grundkörperachse 12 fluchtet. Andererseits ist eine Verschiebung des Arbeitsschiebers 14 nur möglich, wenn die Betätigungsstange 65 mit ihrem stirnseitigen Kupplungsteil 67 in den Freiraum 104 zwischen Arbeitsschieber 14 und Führungs- und Lagerbüchse 62 zurückgezogen ist (Pfeil 65'). Der eigentliche Spannvorgang beim Werkzeugwechsel erfolgt durch Drehen der eingekuppelten Betätigungsstange 65 in der einen oder anderen Drehrichtung (Pfeil 65'').

Um die Werkzeugaufnahme 24 sauber zu halten und dort vorhandene Späne und Schmutzpartikel zu entfernen, wird die Werkzeugaufnahme 24 über einen maschinenseitigen Druckluftanschluß mit Blasluft versorgt. Die hierzu notwendige Druckluft gelangt über einen Flanschanschluß 106 in einen Druckluftkanal 108 innerhalb des Grundkörpers 10, der in der Mittelstellung des Arbeitsschiebers 14 mit einem Blasluftkanal 110 des Arbeitsschiebers 14 kommuniziert und in die Werkzeugaufnahme 24 mündet.

Zur Versorgung der Werkzeugschneiden mit einem Kühlschmierstoff von der Maschinenseite aus sind im Flansch zwei Kühlschmierstoffanschlüsse 112 vorgesehen, die über Kühlschmierstoffkanäle 114 und Teleskoprohre 116 mit Kühlschmierstoffkanälen 117 im Arbeitsschieber und im Werkzeug verbunden sind.

Ein weiterer Anschluß 118 im Flansch 42 dient zur Versorgung der beweglichen Teile des Plandrehkopfes mit einem zähflüssigen Schmiermittel über die Schmiermittelkanäle 120, die bei Bedarf zusätzlich über einen Schmiernippel 122 mit Schmiermittel beaufschlagbar sind.

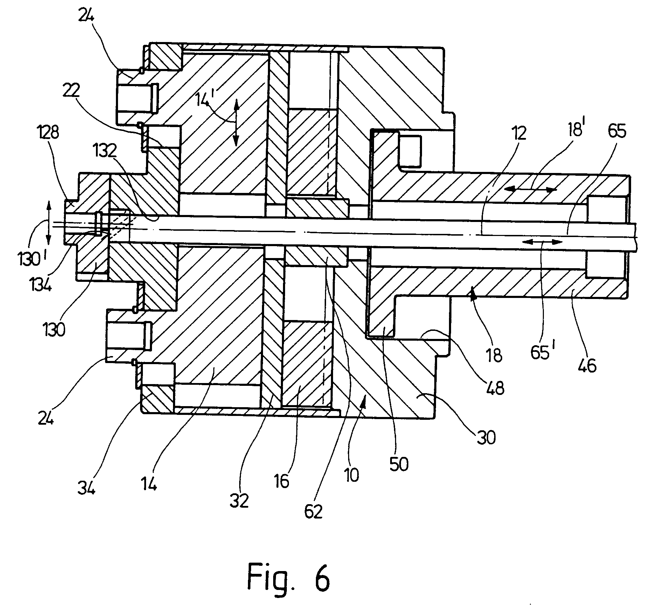

Bei dem in Fig. 6 gezeigten Ausführungsbeispiel weist der Arbeitsschieber 14 zwei exzentrisch angeordnete, durch die Durchbrüche 22 im Deckelteil 34 des Grundkörpers hindurchgreifende Werkzeugaufnahmen 24 auf, die einen nicht dargestellten, extern betätigbaren Spannmechanismus enthalten. Weiter ist am Deckelteil des Grundkörpers ein zweiter, mit einer Werkzeugaufnahme 128 versehener Arbeitsschieber 130 in Richtung des Doppelpfeils 130' quer zur Grundkörperachse 12 verschiebbar gelagert. Die Verschiebung des Arbeitsschiebers 130 erfolgt über die Betätigungsstange 65, die an ihrem stirnseitigen Ende durch eine Axialführung 132 im Deckelteil 34 hindurchgreift und einander diametral gegenüberliegende Schrägverzahnungen 134 trägt, die mit nicht dargestellten komplementären Schrägverzahnungen des zweiten Arbeitsschiebers 130 kämmen.

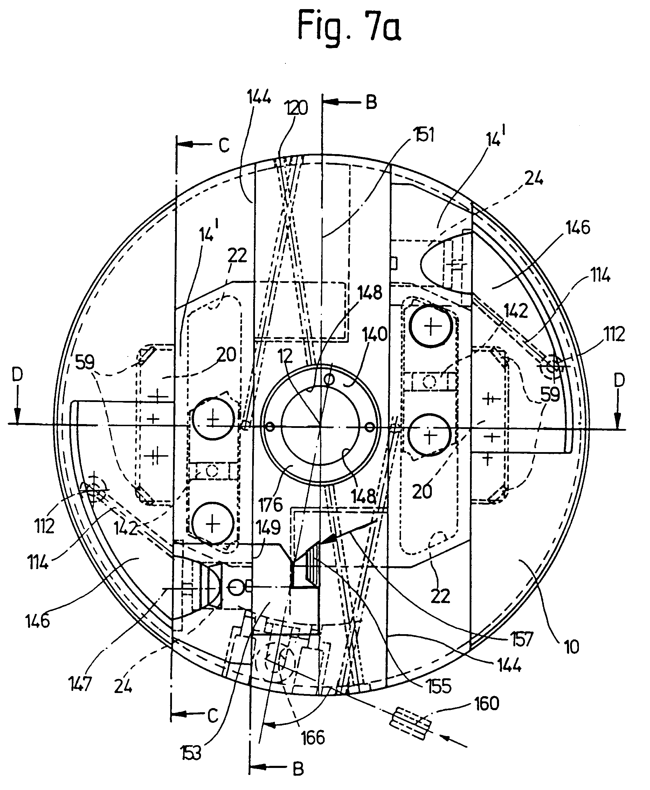

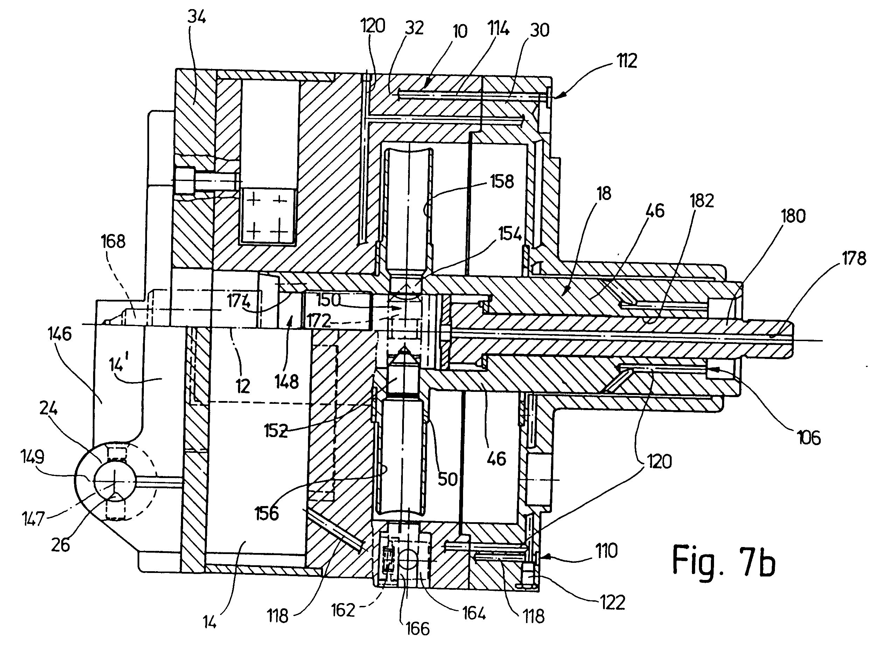

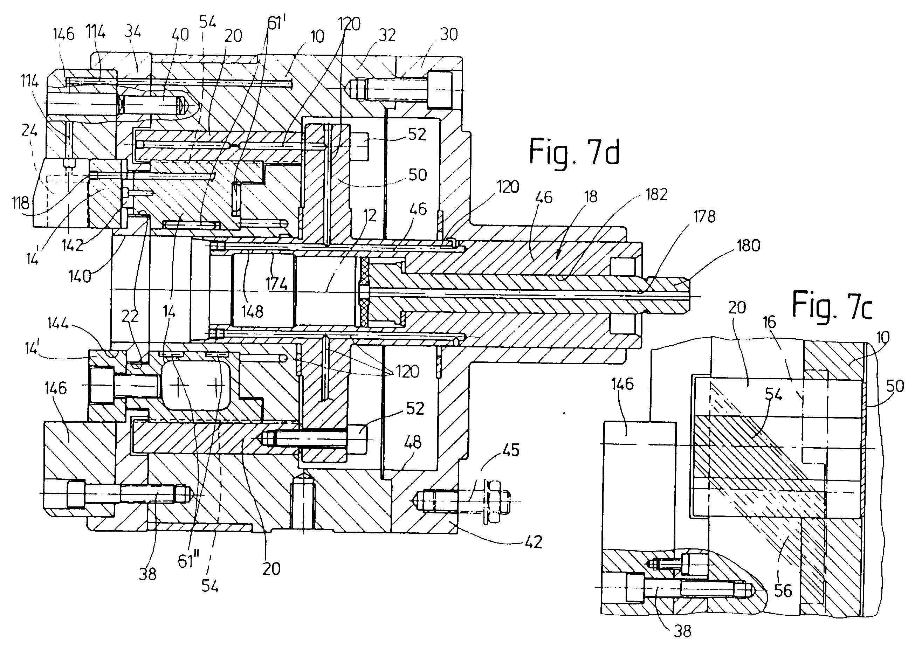

In den Fig. 7a bis d ist ein abgewandeltes Ausführungsbeispiel eines Plandrehkopfs mit zwei Arbeitsschiebern 14 dargestellt, die gemeinsam über die Stellstange 18 in Gegenrichtung parallel zueinander am Grundkörper 10 verschiebbar sind. Die beiden Arbeitsschieber 14 sind durch eine axiale Zentraldurchführung 140 seitlich voneinander getrennt angeordnet. Sie greifen mit einem Gleitstein 142 durch den Durchbruch 22 im Deckelteil 34 hindurch und weisen außenseitig einen Aufnahmeträger 14' mit je einer Werkzeugaufnahme 24 auf. Die Aufnahmeträger 14' sind in je einer Führungsrinne 144 im Deckelteil 34 in Verschieberichtung geführt und radial nach außen hin zusätzlich an einer grundkörperfesten Führungsleiste 146 abgestützt.

Wie insbesondere aus Fig. 7a zu ersehen ist, ist die Achse 147 der Werkzeugaufnahme 24 im Abstand von der Spindelachse 12 quer zu dieser ausgerichtet, während ihre Planfläche 149 parallel zu einer die Spindelachse 12 enthaltenden Mittelebene 151 im Abstand von dieser angeordnet ist. Damit kann die Werkzeugaufnahme 24 mit einem Schneidwerkzeug 153 so bestückt werden, daß die an der Schneide 155 des Schneidwerkzeugs 153 beim Plandrehen und Einstechen auftretende Hauptschnittkraft (Pfeil 157) direkt von der Planfläche 149 aufgenommen wird. Damit läßt sich ein optimaler Kraftschluß erzielen.

Die an dem Bund 50 der Stellstange 18 mittels Schrauben 52 angeschraubten Getriebestangen 20 stehen mit ihren radial nach innen weisenden Schrägverzahnungen 54 mit je einem der Arbeitsschieber 14 im Eingriff. Im Hohlschaft 46 der Stellstange 18 ist eine von der Stirnseite her durch die Zentraldurchführung 140 hindurch zugängliche Werkzeugaufnahme 148 mit einem als ABS-Kupplung ausgebildeten Spannmechanismus 150 angeordnet (ABS ist ein Warenzeichen der Firma Komet Präzisionswerkzeuge Robert Breuning GmbH). Die Spannschraube 152 und die Halteschraube 154 des Spannmechanismus 150 sind durch je einen Radialkanal 156,158 im Bund 50 der Stellstange 18 hindurch mit einem Schraubwerkzeug 160 zugänglich. Während die Halteschraube 154 im demontierten Zustand der Stellstange 18 dauerhaft festgedreht werden muß, ist die Spannschraube 152 auch im montierten Zustand der Stellstange 18 durch eine mittels eines durch eine Feder 162 selbsttätig verstellbaren Verschlußorgans 164 wasserdicht verschließbare Öffnung 166 in der Wand des Grundkörpers 10 hindurch von außen her mit dem Schraubwerkzeug 160 zugänglich. Das in die Werkzeugaufnahme 150 einführbare, beispielsweise als Pinole 168 ausgebildete Werkzeug greift mit seinem mit einem Pendelbolzen 170 bestückten Zylinderschaft 172 in die am stirnseitigen Ende der Stellstange 18 angeformte Zylinderhülse 174 der Werkzeugaufnahme 148 ein und wird mit Hilfe des Spannmechanismus 150 mit einer Ringfläche gegen die stirnseitige Planfläche 176 der Zylinderhülse 174 angezogen und mit dieser verspannt. Die Kühlmittelzufuhr erfolgt von der Maschinenseite her über einen zentralen Kühlmittelkanal 178 in einer Dichtstange 180, die die Axialbohrung 182 des Hohlschafts 46 der Stellstange 18 flüssigkeitsdicht und unverschiebbar durchsetzt.

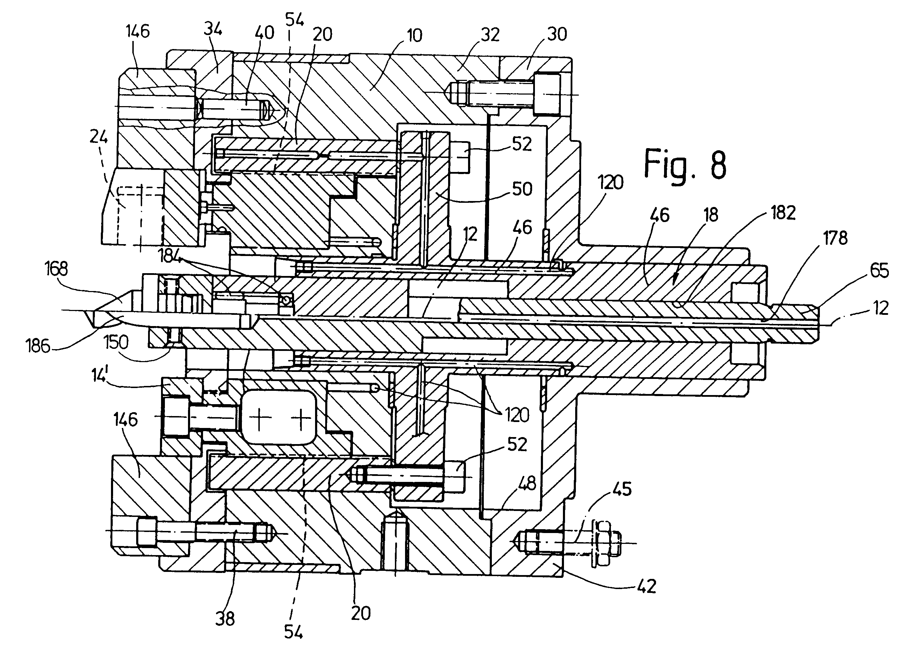

Das in Fig. 8 gezeigte Ausführungsbeispiel unterscheidet sich von dem Ausführungsbeispiel nach Fig. 7d dadurch, daß die Werkzeugaufnahme 148 mit dem Spannmechanismus 150 nicht in der Stellstange 18, sondern in der in der Stellstange 18 verschiebbar angeordneten Betätigungsstange 65 stirnseitig angeordnet ist. In Fig. 8 sind zwei Ausführungsvarianten hierfür eingezeichnet. In der oberen Hälfte der Betätigungsstange 65 ist eine Werkzeugaufnahme 148 dargestellt, die in einem zur Spindelachse 12 konzentrischen Wälzlager 184 frei drehbar gelagert und mit einer Pinolenspitze 168 bestückt ist. Im unteren Teil ist eine mit der Betätigungsstange 65 starr verbundene Aufnahme 148 dargestellt, in der ein Bohrer 186 eingespannt ist.

Zusammenfassend wird folgendes festgestellt: Die Erfindung bezieht sich auf einen Plandrehkopf, der einen an einer Maschinenspindel befestigbaren Grundkörper 10, einen im wesentlichen quer zur Spindelachse 12 am Grundkörper 10 verschiebbaren, eine Werkzeugaufnahme 24 mit Spannmechanismus 26 zum Einspannen eines Werkzeugs aufweisenden Arbeitsschieber 14 und einen Verstellmechanismus für den Arbeitsschieber 14 aufweist. Der Verstellmechanismus enthält eine zentral durch die hohl ausgebildete Maschinenspindel 44 hindurch in den Grundkörper 10 eingreifende, axial verschiebbare Stellstange 18 und die Axialbewegung der Stellstange in die Querbewegung des Arbeitsschiebers 14 umsetzende Getriebemittel 20. Um einen günstigen Kraftangriff zwischen Stellstange 18 und Schieber 14 und damit ein günstiges Gleitverhalten und eine hohe Stellgenauigkeit zu gewährleisten, wird gemäß der Erfindung vorgeschlagen, daß die Stellstange 18 an ihrem schieberseitigen Ende zwei außermittige, einander diametral gegenüberliegende, achsparallel ausgerichtete und im Grundkörper 10 axial geführte Getriebestangen 20 trägt, die im wesentlichen radial nach dem Grundkörperinneren weisende Schrägverzahnungen 54 aufweisen, die mit komplementären, radial nach außen weisenden Schrägverzahnungen 56 des Arbeitsschiebers 14 in Eingriff stehen.

## Patentansprüche

1. Werkzeugkopf, insbesondere Plan- oder Ausdrehkopf, mit einem an der Maschinenspindel (44) einer Werkzeugmaschine befestigbaren Grundkörper (10), mit mindestens einem im wesentlichen quer zur Spindelachse (12) am Grundkörper (10) verschiebbaren, mindestens eine Werkzeugaufnahme (24) mit Spannmechanismus (26) zum Einspannen eines Schneidwerkzeugs oder eines Werkzeughalters (28) aufweisenden Arbeitsschieber (14), mit einem eine zentral durch die hohl ausgebildete Maschinenspindel (44) hindurch in den Grundkörper (10) eingreifende, axial verschiebbare Stellstange (18) und die Axialbewegung der Stellstange (18) in die Querbewegung des Arbeitsschiebers (14) umsetzende Getriebemittel (20,54 bis 60) aufweisenden, maschinenseitig betätigbaren Verstellmechanismus, wobei die Stellstange (18) an ihrem schieberseitigen Ende zwei außermittige, einander diametral gegenüberliegende, achsparallel ausgerichtete und im Grundkörper (10) axial geführte Getriebestangen (20) trägt, die im wesentlichen radial nach dem Grundkörperinneren weisende Schrägverzahnungen (54) aufweisen, die mit komplementären, radial nach außen weisenden Schrägverzahnungen (56) des mindestens einen Arbeitsschiebers (14) in Eingriff stehen, und wobei die Stellstange (18) hohl ausgebildet ist.

2. Werkzeugkopf nach Anspruch 1, **dadurch gekennzeichnet**, daß die Getriebestangen (20) zusätzlich mit den radial nach außen weisenden Schrägverzahnungen (60) mindestens eines in Gegenrichtung des Arbeitsschiebers (14) verschiebbaren Ausgleichsschiebers (16) in Eingriff stehen.

3. Werkzeugkopf nach einem der Ansprüche 1 oder 2, **dadurch gekennzeichnet**, daß die Getriebestangen (20) plattenförmig ausgebildet sind oder ein plattenförmig verbreitertes schieberseitiges Ende aufweisen.

4. Werkzeugkopf nach Anspruch 3, **dadurch gekennzeichnet**, daß zumindest ein Teil der Schrägverzahnungen (54,56) auf der radial nach innen weisenden Breitseitenfläche der plattenförmig verbreiterten Getriebestangenteile angeordnet sind.

5. Werkzeugkopf nach einem der Ansprüche 1 bis 4, **dadurch gekennzeichnet**, daß die Stellstange (18) einen Hohlschaft (46) und einen am grundkörperseitigen Ende des Hohlschafts (46) radial überstehenden, in eine Axialausnehmung (48) des Grundkörpers (10) eingreifenden Bund (50) aufweist, und daß die Getriebestangen auf der dem Hohlschaft (46) gegenüberliegenden Seite des Bunds (50) einander diametral gegenüberliegend und achsparallel überstehend am Bund (50) befestigt, vorzugsweise angeschraubt sind.

6. Werkzeugkopf nach einem der Ansprüche 1 bis 5, **dadurch gekennzeichnet**, daß eine durch die hohle Stellstange (18) zentral hindurchgreifende, maschinenseitig betätigbare Betätigungsstange (65) vorgesehen ist.

7. Werkzeugkopf nach Anspruch 6, **dadurch gekennzeichnet**, daß die Betätigungsstange (65) innerhalb des Grundkörpers (10) mit dem Spannmechanismus (26) lösbar kuppelbar ist.

8. Werkzeugkopf nach Anspruch 7, **dadurch gekennzeichnet**, daß die Betätigungsstange (65) an ihrem schieberseitig durch die hohle Stellstange (18) hindurchgreifenden Ende mindestens ein vorzugsweise klauenartiges Kupplungselement (67) trägt, das mit einem komplementären, schieberseitig angeordneten, mit dem Spannmechanismus (26) verbundenen Kupplungselement (102) vorzugsweise in einer Mittelstellung des Arbeitsschiebers (14) kuppelbar ist.

9. Werkzeugkopf nach einem der Ansprüche 6 bis 8, **dadurch gekennzeichnet**, daß die Betätigungsstange (65) im Bereich ihres schieberseitig durch die hohle Stellstange (18) hindurchgreifenden Endes in einer mit der Stellstange (18) fluchtenden, grundkörperfesten Führungs- und Lagerbüchse (62) in Kupplungsrichtung (65') axial geführt und vorzugsweise drehgelagert ist.

10. Werkzeugkopf nach Anspruch 9, **dadurch gekennzeichnet**, daß die Führungs- und Lagerbüchse (62) ein vorzugsweise als Nadellager (64) ausgebildetes Wälzlager für die Betätigungsstange (65) aufweist.

11. Werkzeugkopf nach Anspruch 9 oder 10, **dadurch gekennzeichnet**, daß zwischen der Führungs- und Lagerbüchse (62) und dem schieberseitigen Kupplungselement (102) sich ein axialer Freiraum (104) zur Aufnahme des Kupplungselements (67) der Betätigungsstange (65) in ausgekuppelter Ruhestellung befindet.

12. Werkzeugkopf nach einem der Ansprüche 7 bis 11, **dadurch gekennzeichnet**, daß der Spannmechanismus (26) einen im Arbeitsschieber (14) um eine zur Spindelachse (12) parallele Achse (94) axial unverschiebbar gelagerten, das schieberseitige Kupplungselement (102) tragenden Drehteller (96) aufweist, dessen Drehbewegung über Getriebemittel (92,70) in eine radiale Spannbewegung von innerhalb der Werkzeugaufnahme (24) in einen Hohlschaft (28) des Werkzeugs oder des Werkzeughalters eingreifenden Spannorganen (68) umsetzbar ist.

13. Werkzeugkopf nach Anspruch 12, **dadurch gekennzeichnet**, daß der Drehteller (96) innerhalb des Arbeitsschiebers (14) in axialen Wälzlagern (95) gelagert ist.

14. Werkzeugkopf nach Anspruch 12 oder 13, **dadurch gekennzeichnet**, daß der Drehteller (96) auf der Seite der Betätigungsstange einen achszentralen Zentrierstift (100) und mindestens zwei exzentrische, achsparallel überstehende, die Kupplungselemente bildende Kupplungsklauen (102) aufweist.

15. Werkzeugkopf nach einem der Ansprüche 12 bis 14, **dadurch gekennzeichnet**, daß der Drehteller (96) eine axial überstehende Gewindestange (92) trägt, die in ein Innengewinde einer radial innerhalb der Spannorgane (68) angeordneten, zentral durch die Werkzeugaufnahme (24) drehfest hindurchgreifenden, axial verschiebbaren und mit mantelseitigen Spannkegeln gegen innenseitige Schrägflächen (88,90) der Spannorgane (68) einwirkende Spannhülse (70) eingreift.

16. Werkzeugkopf nach Anspruch 15, **gekennzeichnet durch** mehrere, die Spannorgane (68) bildende, in Umfangsrichtung einen Abstand voneinander aufweisende, achsparallel ausgerichtete Zangensegmente, die mit außenseitigen, axial einander entgegengesetzt ausgerichteten, keilförmigen oder konischen Spannflächen (74,80) gegen entsprechende konischen Spannflanken (76,82) des Werkzeughohlschafts (28) und des Arbeitsschiebers (14) unter axialer und radialer Einspannung des Werkzeugs oder Werkzeughalters (28) in der Werkzeugaufnahme (24) abgestützt sind.

17. Werkzeugkopf nach einem der Ansprüche 1 bis 16, **dadurch gekennzeichnet**, daß die Werkzeugaufnahme (24) eine zylindrische, doppelzylindrische oder konische Innenfläche zur Aufnahme eines Werkzeughohlschafts (28) mit entsprechender Mantelfläche aufweist.

18. Werkzeugkopf nach einem der Ansprüche 1 bis 17, **gekennzeichnet durch** mindestens einen im Grundkörper (10) angeordneten, über eine Spindelbohrung mit Kühlschmierstoff beaufschlagbaren Kühlschmierstoffkanal (114), der über ein radial ausgerichtetes, flüssigkeitsdichtes Teleskoprohr (116) in einen zur Werkzeugaunahme führenden Kühlschmierstoffkanal im Arbeitsschieber (14) mündet.

19. Werkzeugkopf nach einem der Ansprüche 1 bis 18, **gekennzeichnet durch** einen im Grundkörper (10) angeordneten, vorzugsweise über eine Spindelbohrung mit Druckluft beaufschlagbaren Druckluftkanal (118), der in der Mittelstellung des Arbeitsschiebers (14) mit einem schieberseitigen, in das Innere der Werkzeugaufnahme (24) führenden Blasluftkanal (110) kommuniziert.

20. Werkzeugkopf nach einem der Ansprüche 1 bis 19, **dadurch gekennzeichnet**, daß am Grundkörper (10) ein im wesentlichen quer zur Spindelachse (12) verschiebbarer zweiter Arbeitsschieber (130) angeordnet ist, und daß die durch die hohle Stellstange (18) hindurchgreifende, innerhalb des Grundkörpers (10) axial geführte Betätigungsstange (65) über die Axialbewegung (65') der Betätigungsstange (65) in eine Querbewegung (130') des zweiten Arbeitsschiebers (130) umsetzende zweite Getriebemittel (134) mit dem zweiten Arbeitsschieber (130) kuppelbar ist.

21. Werkzeugkopf nach Anspruch 20, **dadurch gekennzeichnet**, daß die zweiten Getriebemittel (134) durch zwei in der Nähe des stirnseitigen Endes auf diametral gegenüberliegenden Seiten der Betätigungsstange (65) radial nach außen weisende Schrägverzahnungen (134) und zwei am zweiten Arbeitsschieber (130) symmetrisch zur Betätigungsstange (65) angeordnete, radial nach innen weisende, mit den Schrägverzahnungen (134) der Betätigungsstange (65) kämmende Zahnleisten gebildet sind.

22. Werkzeugkopf nach Anspruch 20 oder 21, **dadurch gekennzeichnet**, daß der erste und der zweite Arbeitsschieber (14,130) parallel zueinander am Grundkörper (10) verschiebbar sind.

23. Werkzeugkopf nach einem der Ansprüche 1 bis 22, **dadurch gekennzeichnet**, daß die Getriebestangen (20) mit je einem von zwei in Gegenrichtung parallel zueinander am Grundkörper (10) verschiebbaren, durch eine Zentraldurchführung (140) seitlich voneinander getrennten Arbeitsschiebern (14) in Eingriff stehen.

24. Werkzeugkopf nach einem der Ansprüche 1 bis 23, **dadurch gekennzeichnet**, daß die Stellstange (18) oder die in ihrer Zentraldurchführung (140) geführte Betätigungsstange (65) eine durch die Zentraldurchführung (140) axial zugängliche Werkzeugaufnahme (148) für eine Pinole (168) mit zur Spindelachse koaxial gelagerter mitlaufender Spitze zur Werkstückabstützung oder ein Bearbeitungswerkzeug (186) aufweist.

25. Werkzeugkopf nach Anspruch 24, **dadurch gekennzeichnet**, daß die Werkzeugaufnahme (148) einen radial durch eine vorzugsweise selbsttätig flüssigkeitsdicht verschließbare Öffnung (166) mittels eines Schraubwerkzeugs (160) zugänglichen Spannmechanismus (150) aufweist.

26. Werkzeugkopf nach Anspruch 25, **dadurch gekennzeichnet**, daß der Spannmechanismus (150) durch mindestens einen Radialkanal (156,158) des Bundes (50) der Stellstange (18) hindurch von außen her mittels eines Schraubwerkzeugs (160) zugänglich ist.

27. Werkzeugkopf nach einem der Ansprüche 1 bis 26, **gekennzeichnet durch** eine die hohle Stellstange (18) zentral durchsetzende, eine Kühlmittelbohrung (178) aufweisende Dichtstange (180) oder Betätigungsstange (65).

28. Werkzeugkopf nach einem der Ansprüche 1 bis 27, **dadurch gekennzeichnet**, daß die Getriebestangen (20) und/oder die Arbeitsschieber (14) zumindest an ihren von den Schrägverzahnungen (54,58) abgewandten Führungsflächen über vorgespannte Wälzführungen (59,61,61',61'') am Grundkörper (10,32,34) abgestützt sind.

29. Werkzeugkopf nach Anspruch 28, **dadurch gekennzeichnet**, daß die Getriebestangen (20) und/oder die Arbeitsschieber (14) zumindest an ihren von den Schrägverzahnungen (54,58) abgewandten Führungsflächen über kombinierte Wälz-Gleitführungen am Grundkörper (10,32,34) abgestützt sind, wobei die einander zugewandten Gleitführungs£lächen nur bei Überschreiten einer vorgegebenen Querbelastung und elastischen Verformung der Wälzführungen gegeneinander anliegen.

30. Werkzeugkopf nach einem der Ansprüche 1 bis 29, **dadurch gekennzeichnet**, daß der Arbeitsschieber (14) eine Werkzeugaufnahme (24) mit einer Planfläche (149) zur Planflächenverspannung mit einem Schneidwerkzeug (153) aufweist, deren Achse (147) im Abstand von der Spindelachse (12) quer zu dieser ausgerichtet ist und deren Planfläche (149) parallel zu einer die Spindelachse (12) enthaltenden Mittelebene (151) im Abstand von dieser angeordnet ist.

31. Werkzeugkopf nach Anspruch 30, **dadurch gekennzeichnet**, daß die Werkzeugaufnahme (24) mit einem Schneidwerkzeug (153) so bestückbar ist, daß die an seiner Schneide (155) beim Plandrehen und Einstechen auftretende Hauptschnittkraft (157) quer zur Planfläche (149) gerichtet ist.

32. Werkzeugkopf nach einem der Ansprüche 1 bis 31, **dadurch gekennzeichnet**, daß der Arbeitsschieber (14) und der Grundkörper (10) mit einem Maßstab und einem Sensor zur direkten Verschiebewegmessung bestückt sind.

## Claims

1. A tool head, in particular a facing or boring head, having a basic body (10) which can be fastened on the machine spindle (44) of a machine tool, having at least one working slide (14) which can be displaced on the basic body (10) essentially transversely with respect to the spindle axis (12) and has at least one tool carrier (24) with clamping mechanism (26) for clamping a cutting tool or a tool holder (28), having an adjustment mechanism which can be actuated from the machine and has an axially displaceable adjusting rod (18), which is receives centrally into the basic body (10) through the hollow machine spindle (44), and gear mechanisms (20, 54 to 60) which convert the axial movement of the adjusting rod (18) into the transverse movement or the working slide (14), characterized in that, at its end near the slide, the adjusting rod (18) supports two off-center gear rods (20) which are located diametrically opposite one another, are aligned in an axis-parallel manner, are guided axially in the basic body (10) and have oblique toothing arrangements (54) which are oriented essentially radially towards the basic-body interior and are in engagement with complementary, radially outwardly oriented oblique toothing arrangements (56) of the at least one working slide (14), and wherein the adjusting rod (18) is formed to be hollow.

2. The tool head as claimed in claim 1,
characterized in that the gear rods (20) are additionally in engagement with the radially outwardly oriented oblique toothing arrangements (60) of at least one compensation slide (16), which can be displaced in the opposite direction from the working slide (14).

3. The tool head as claimed in claim 1 or 2, characterized in that the gear rods (20) are designed in the form of plates or have a slide-side end which is widened in the form of a plate.

4. The tool head as claimed in claim 3, characterized in that at least part of the oblique toothing arrangements (54, 56) is arranged on the radially inwardly oriented broadened side surface of the gear-rod parts widened in the form of plates.

5. The tool head as claimed in one of claims 1 to 4, characterized in that the adjusting rod (18) has a hollow shank (46) and a collar (50) which extends radially at the basic-body end of the hollow shank (46) and is received by an axial recess (48) of the basic body (10), and that on that side of the collar (50) which is located opposite the hollow shank (46), the gear rods are fastened, preferably screwed, on the collar (50) such that they are located diametrically opposite one another and extend in an axis-parallel manner.

6. The tool head as claimed in one of claims 1 to 5, characterized in that an actuating rod (65) which can be actuated from the machine and is received centrally through the adjusting rod (18) is provided.

7. The tool head as claimed in claim 6, characterized in that the actuating rod (65) can be coupled in a releasable manner to the clamping mechanism (26) within the basic body (10).

8. The tool head as claimed in claim 7, characterized in that at its end which is received through the hollow adjusting rod (18) on the slide side, the actuating rod (65) supports at least one preferably claw-like coupling element (67) which can be coupled, preferably in a central position of the working slide (14), to a complementary coupling element (102) which is arranged on the slide side and is connected to the clamping mechanism (26).

9. The tool head as claimed in one of claims 6 to 8, characterized in that in the region of its end which is received through the hollow adjusting rod (18) toward the slide, the actuating rod (65) is guided axially in the coupling direction (65'), and is preferably rotationally mounted in a guiding and bearing bushing (62), which is in alignment with the adjusting rod (18) and is fixed to the basic body.

10. The tool head as claimed in claim 9, characterized in that the guiding and bearing bushing (62) has a rolling-contact bearing which is designed preferably as a needle bearing (64) and is intended for the actuating rod (65).

11. The tool head as claimed in claim 9 or 10, characterized in that an axial cavity (104) for receiving a coupling element (67) of the actuating rod (65) in the disengaged rest position is located between the guiding and bearing bushing (62) and a slide-side coupling element (102).

12. The tool head as claimed in one of claims 7 to 11, characterized in that the clamping mechanism (26) has a rotary plate (96) which is mounted in the working slide (14) in an axially non-displaceable manner about an axis (94) parallel to the spindle axis (12), supports the coupling element (102) near the slide, and the rotary movement of which can be converted, via gear mechanisms (92, 70), into a radial clamping movement of clamping members (68) which are received, within the tool carrier (24), into a hollow shank (28) of the tool or of the tool holder.

13. The tool head as claimed in claim 12, characterized in that the rotary plate (96) is mounted in axial rolling-contact bearings (95) within the working slide (14).

14. The tool head as claimed in claim 12 or 13, characterized in that on the side of the actuating-rod, the rotary plate (96) has an axially central centering pin (100) and at least two eccentric coupling claws (102) which extend in an axis-parallel manner and form the coupling elements.

15. The tool head as claimed in one of claims 12 to 14, characterized in that the rotary plate (96) supports an axially extending threaded rod (92) which is received by an internal thread of an axially displaceable clamping sleeve (70), which is arranged radially within the clamping members (68), received centrally through the tool carrier (94) in a rotationally fixed tanner and acts, by way of clamping cones on its outer side, against oblique inner surfaces (88, 90) of the clamping members (68).

16. The tool head as claimed in claim 15, characterized by a plurality of tong segments which form the clamping members (68), are at a distance apart from one another in the circumferential direction, are aligned in an axis-parallel manner and are supported, by means of outer wedge-shaped or conical clamping surfaces (74, 80) which are aligned axially opposite one another, against corresponding conical clamping flanks (76, 82) of the hollow tool shank (28) and of the working slide (14), the tool or tool holder (28) being clamped axially and radially in the tool carrier (24) in the process.

17. The tool head as claimed in one of claims 1 to 16, characterized in that the tool carrier (24) has a cylindrical, double-cylindrical or conical inner surface for receiving a hollow tool shank (28) with corresponding outer surface.

18. The tool head as claimed in one of claims 1 to 17, characterized by at least one cooling-lubricant duct (114) which is arranged in the basic body (10), can be supplied with cooling lubricant via a spindle bore and opens, via a radially aligned, fluid-tight telescopic tube (116), into a cooling-lubricant duct which leads to the tool carrier and is arranged in the working slide (14).

19. The tool head as claimed in one of claims 1 to 18, characterized by a compressed-air duct (118) which is arranged in the basic body (10), can be supplied with compressed air preferably via a spindle bore and, in the central position of the working slide (14), communicates with a blowing-air duct from the side near the slide (110) which leads into the interior of the tool carrier (24).

20. The tool head as claimed in one of claims 1 to 19, characterized in that a second working slide (130) which can be displaced essentially transversely with respect to the spindle axis (12) is arranged on the basic body (10), and that the actuating rod (65), which is received through the hollow adjusting rod (18) and is guided axially within the basic body (10), can be coupled to the second working slide (130) via second gear mechanisms (134) which convert the axial movement (65') of the actuating rod (65) into a transverse movement (130') of the second working slide (130).

21. The tool head as claimed in claim 20, characterized in that the second gear mechanisms (134) are formed by two obligue toothing arrangements (134) which are oriented radially outwards on diametrically opposite sides of the actuating rod (65), in the vicinity of the end, and by two radially inwardly oriented toothed strips which are arranged on the second working slide (130) symmetrically with respect to the actuating rod (65) and mesh with the oblique toothing arrangements (134) of the actuating rod (65).

22. The tool head as claimed in claim 20 or 21, characterized in that the first and the second working slides (14,130) can be displaced on the basic body (10) parallel to one another.

23. The tool head as claimed in one of claims 1 to 22, characterized in that the gear rods (20) are in engagement with in each case one of two working slides (14) which can be displaced on the basic body (10) parallel to one another and in opposite directions and are separated laterally from one another by a central passageway (140).

24. The tool head as claimed in one of claims 1 to 23, characterized in that the adjusting rod (18) or an actuating rod (65) guided in its central passageway (140) has a tool carrier (148) which is axially accessible through the central passageway (140) and is intended for a machining tool (186) or for a quill (168) with co-running center which is mounted coaxially with respect to the spindle axis and is intended for supporting workpieces.

25. The tool head as claimed in claim 24, characterized in that the tool carrier (148) has a clamping mechanism (150) which is radially accessible, by means of a screwing tool (160), through an opening (166) which can be closed preferably automatically in a fluid-tight manner.

26. The tool head as claimed in claim 25, characterized in that the clamping mechanism (150) is accessible from outside, by means of a screwing tool (160), through at least one radial duct (156, 158) of the collar (50) of the adjusting rod (18).

27. The tool head as claimed in one of claims 1 to 26, characterized by an actuating rod (65) or sealing rod (180) which has a coolant bore (178) and passes centrally through the hollow adjusting rod (18).

28. The tool head as claimed in one of claims 1 to 27, characterized in that the gear rods (20) and/or the working slides (14) are supported on the basic body (10, 32, 34), at least by their guide surfaces remote from the oblique toothing arrangements (54, 58), via prestressed rolling-contact guides (59, 61, 61', 61'').

29. The tool head as claimed in claim 28, characterized in that the gear rods (20) and/or the working slides (14) are supported on the basic body (10, 32, 34), at least by their guide surfaces remote from the oblique toothing arrangements (54, 58), via combined rolling-contact/sliding guides, the facing sliding-guide surfaces resting against one another only when predetermined transverse loading is exceeded and the rolling-contact guides are elastically deformed.

30. The tool head as claimed in one of claims 1 to 29, characterized in that the working slide (14) has a tool carrier (24) with an end face (149) for end face bracing with a cutting tool (153), the axis (147) of said tool carrier being aligned transversely with respect to the spindle axis (12), at a distance therefrom, and the end face (149) of said tool carrier being arranged parallel to a center plane (151), which contains the spindle axis (12), and at a distance therefrom.

31. The tool head as claimed in claim 30, characterized in that the tool carrier (24) can be fitted with a cutting tool (153) such that the main cutting force (157) which occurs at its cutting edge (155) during facing and plunge-cutting is directed transversely with respect to the end face (149).

32. The tool head as claimed in one of claims 1 to 31, characterized in that the working slide (14) and the basic body (10) are fitted with a rule and a sensor for direct displacement-path measurement.

## Revendications

1. Tête d'outil, notamment tête d'outil de surfaçage ou de travail en plongée, comprenant un corps de base (10) pouvant être fixé sur la broche (44) d'une machine-outil, au moins un coulisseau de travail (14) comportant au moins un raccordement d'outil (24) avec mécanisme de serrage (26) pour la fixation d'un outil de coupe ou d'un porte-outil (28) et déplaçable sensiblement transversalement à l'axe (12) de la broche sur le corps de base (10), un mécanisme de réglage qui peut être commandé du côté machine et présente une barre de réglage (18) mobile dans le sens axial et s'engageant dans le corps de base (10) en traversant le centre de la broche de machine (44) creuse, ainsi que des moyens de transmission (20, 54 à 60) transformant le mouvement axial de la barre de réglage (18) en un mouvement transversal du coulisseau de travail (14), dans laquelle la barre de réglage (18) porte à son extrémité côté coulisseau deux barres d'engrenage (20) excentriques diamétralement opposées, orientées parallèlement à l'axe et guidées axialement dans le corps de base (10), qui sont munies de dentures hélicoïdales (54) dirigées sensiblement radialement vers l'intérieur du corps de base et coopérant avec des dentures hélicoïdales (56) complémentaires du coulisseau de travail (14) au nombre d'au moins un, dirigées radialement vers l'extérieur, et dans laquelle la barre de réglage (18) est creuse.

2. Tête d'outil selon la revendication 1, caractérisée en ce que les barres d'engrenage (20) coopèrent, en plus, avec les dentures hélicoïdales (60) dirigées radialement vers l'extérieur, d'au moins un coulisseau de compensation (16) déplaçable dans le sens opposé au coulisseau de travail (14).

3. Tête d'outil selon l'une des revendications 1 ou 2, caractérisée en ce que les barres d'engrenage (20) sont conformées en plaques et présentent du côté coulisseau une extrémité élargie en forme de plaque.

4. Tête d'outil selon la revendication 3, caractérisée en ce qu'au moins une partie des dentures hélicoïdales (54, 56) sont disposées sur la surface du côté large des éléments de barres d'engrenage élargis en forme de plaque, dirigée radialement vers l'intérieur.

5. Tête d'outil selon l'une des revendications 1 à 4, caractérisée en ce que la barre de réglage (18) comprend une tige creuse (46) et un collet (50) qui dépasse radialement de l'extrémité de la tige creuse (46) du côté corps de base et s'engage dans un évidement axial (48) du corps de base (10), et que les barres d'engrenage sont fixées, de préférence vissées, du côté du collet (50) opposé à la tige creuse (46) de manière diamétralement opposée et dépassant parallèlement à l'axe, sur le collet (50).

6. Tête d'outil selon l'une des revendications 1 à 5, caractérisée en ce qu'elle comprend une barre de manoeuvre (65) qui traverse concentriquement la barre de réglage (18) et peut être actionnée du côté machine.

7. Tête d'outil selon la revendication 6, caractérisée en ce que la barre de manoeuvre (65) peut être couplée de manière amovible, à l'intérieur du corps de base (10), avec le mécanisme de serrage (26).

8. Tête d'outil selon la revendication 7, caractérisée en ce que la barre de manoeuvre (65) porte à son extrémité traversant la barre de réglage (18) creuse du côté coulisseau, au moins un élément d'accouplement (67), de préférence en forme de griffes, qui peut être couplé, de préférence dans une position médiane du coulisseau de travail (14), avec un élément d'accouplement (102) complémentaire disposé du côté coulisseau et rattaché au mécanisme de serrage (26).

9. Tête d'outil selon l'une des revendications 6 à 8, caractérisée en ce que la barre de manoeuvre (65) est guidée axialement, dans la direction d'accouplement (65'), et montée de préférence de manière tournante, dans la région de son extrémité du côté coulisseau qui traverse la barre de réglage (18) creuse, dans une douille de guidage-coussinet (62) solidaire du corps de base et alignée avec la barre de réglage (18).

10. Tête d'outil selon la revendication 9, caractérisée en ce que la douille de guidage-coussinet (62) comprend un palier à roulement pour la barre de manoeuvre (65) conformé de préférence en roulement à aiguilles (64).

11. Tête d'outil selon la revendication 9 ou 10, caractérisée en ce qu'entre la douille de guidage-coussinet (62) et l'élément d'accouplement (102) du côté coulisseau se trouve un espace libre (104) pour la réception de l'élément d'accouplement (67) de la barre de manoeuvre (65) dans la position de repos dé-brayée.

12. Tête d'outil selon l'une des revendications 7 à 11, caractérisée en ce que le mécanisme de serrage (26) comprend un plateau tournant (96) monté dans le coulisseau de travail (14) axialement fixe par rapport à un axe (94) parallèle à l'axe (12) de la broche et portant l'élément d'accouplement (102) côté coulisseau, dont le mouvement de rotation peut être transformé par l'intermédiaire de moyens de transmission (92, 70) en un mouvement de serrage radial d'organes de serrage (68) qui, à l'intérieur du raccordement d'outil (24), s'engagent dans une tige creuse (28) de l'outil ou du porte-outil.

13. Tête d'outil selon la revendication 12, caractérisée en ce que le plateau tournant (96) est monté, à l'intérieur du coulisseau de travail (14), dans des paliers à roulement axiaux (95).

14. Tête d'outil selon la revendication 12 ou 13, caractérisée en ce que le plateau tournant (96) comporte, du côté de la barre de manoeuvre, une broche de centrage (100) centrée sur l'axe et au moins deux griffes d'accouplement (102) excentriques en saillie parallèlement à l'axe qui forment les éléments d'accouplement.

15. Tête d'outil selon l'une des revendications 12 à 14, caractérisée en ce que le plateau tournant (96) porte une tige filetée (92) en saillie axiale qui s'engage dans un filetage intérieur d'une douille de serrage (70)disposée radialement à l'intérieur des organes de serrage (68), traversant concentriquement et de manière rigide en rotation le raccordement d'outil (24), et déplaçable dans le sens axial en agissant avec des cônes de serrage situés du côté de la surface latérale sur des surfaces inclinées (88, 90) intérieures des organes de serrage (68).

16. Tête d'outil selon la revendication 15, caractérisée par plusieurs segments de pince formant les organes de serrage (68) disposés à distance les uns des autres dans la direction circonférentielle et orientés parallèlement à l'axe, qui s'appliquent avec des surfaces de serrage (74, 80) extérieures en forme de clavette ou de coin orientées axialement en sens opposé, contre des flancs de serrage (76, 82) coniques conjugués de la tige creuse (28) de l'outil et du coulisseau de travail (14), avec fixation axiale et radiale de l'outil ou du porte-outil (28) dans le raccordement d'outil (24).

17. Tête d'outil selon l'une des revendications 1 à 16, caractérisée en ce que le raccordement d'outil (24) présente une surface intérieure cylindrique, cylindrique double ou conique pour la réception d'une tige creuse (28) de l'outil avec une surface latérale correspondante.

18. Tête d'outil selon l'une des revendications 1 à 17, caractérisée par au moins un canal de réfrigérant lubrifiant (114) disposé dans le corps de base (10) qui peut être alimenté en réfrigérant lubrifiant par l'intermédiaire d'un alésage de broche et qui débouche par l'intermédiaire d'un tube télescopique (116) étanche aux liquides et orienté dans le sens radial, dans un canal de réfrigérant lubrifiant dans le coulisseau de travail (14) menant au raccordement d'outil.

19. Tête d'outil selon l'une des revendications 1 à 18, caractérisée par un canal d'air comprimé (118) disposé dans le corps de base (10) et pouvant être alimenté en air comprimé par l'intermédiaire d'un alésage de broche, qui communique dans la position médiane du coulisseau de travail (14) avec un canal d'air de soufflage (110) disposé du côté coulisseau et menant à l'intérieur du raccordement d'outil (24).

20. Tête d'outil selon l'une des revendications 1 à 19, caractérisée en ce que sur le corps de base (10) est disposé un second coulisseau de travail (130) déplaçable sensiblement transversalement à l'axe (12) de la broche, et que la barre de manoeuvre (65) traversant la barre de réglage (18) creuse et guidée axialement à l'intérieur du corps de base (10) peut être couplée avec le second coulisseau de travail (130) par l'intermédiaire de seconds engrenages (134) transformant le mouvement axial (65') de la barre de manoeuvre (65) en un mouvement transversal (130') du second coulisseau de travail (130).

21. Tête d'outil selon la revendication 20, caractérisée en ce que les seconds engrenages (134) sont constitués par deux dentures hélicoïdales (134) dirigées radialement vers l'extérieur et disposées à proximité de l'extrémité frontale, sur des côtés de la barre de manoeuvre (65) diamétralement opposés, et par deux baguettes dentées dirigées radialement vers l'intérieur, disposées sur le second coulisseau de travail (130), symétriquement par rapport à la barre de manoeuvre (65), et coopérant avec les dentures hélicoïdales (134) de la barre de manoeuvre (65).

22. Tête d'outil selon la revendication 20 ou 21, caractérisée en ce que les premier et second coulisseaux de travail (14, 130) peuvent être déplacés parallèlement l'un par rapport à l'autre sur le corps de base (10).

23. Tête d'outil selon l'une des revendications 1 à 22, caractérisée en ce que les barres d'engrenage (20) coopèrent avec respectivement un parmi deux coulisseaux de travail (14) déplaçables sur le corps de base (10) parallèlement l'un à l'autre, en sens opposé, et séparés l'un de l'autre latéralement par une traversée centrale (140).

24. Tête d'outil selon l'une des revendications 1 à 23, caractérisée en ce que la barre de réglage (18) ou la barre de manoeuvre (65) guidée dans sa traversée centrale (140) comprend un raccordement d'outil (148), accessible axialement au travers de la traversée centrale (140), pour un fourreau de broche (168) avec pointe entraînée en rotation et orientée coaxialement à l'axe de la broche, pour le support d'une pièce à usiner ou d'un outil d'usinage (186).

25. Tête d'outil selon la revendication 24, caractérisée en ce que le raccordement d'outil (148) comporte un mécanisme de serrage (150) radialement accessible au moyen d'un outil de vissage (160) au travers d'une ouverture (166), de préférence à obturation automatique et étanche.

26. Tête d'outil selon la revendication 25, caractérisée en ce que le mécanisme de serrage (150) est accessible de l'extérieur, au moyen d'un outil de vissage (160), au travers d'au moins un canal radial (156, 158) du collet (50) de la barre de réglage (18).

27. Tête d'outil selon l'une des revendications 1 à 26, caractérisée par une barre d'étanchéité (180) ou une barre de manoeuvre (65) qui traverse concentriquement la barre de réglage (18) creuse et comporte un alésage de réfrigérant (178).

28. Tête d'outil selon l'une des revendications 1 à 27, caractérisée en ce que les barres d'engrenage (20) et/ou les coulisseaux de travail (14) prennent appui sur le corps de base (10, 32, 34) au moins avec leurs surfaces de guidage détournées des dentures hélicoïdales (54, 58), par l'intermédiaire de guidages à roulement (59, 61, 61', 61'') mis en précontrainte.

29. Tête d'outil selon la revendication 28, caractérisée en ce que les barres d'engrenage (20) et/ou les coulisseaux de travail (14) prennent appui sur le corps de base (10, 32, 34) au moins avec leurs surfaces de guidage détournées des dentures hélicoïdales (54, 58), par l'intermédiaire de guidages à roulement et à glissement combinés, les surfaces de guidage à glissement tournées l'une vers l'autre n'étant appliquées l'une contre l'autre qu'en cas de dépassement d'une charge transversale prédéterminée et d'une déformation élastique des guidages à roulement.

30. Tête d'outil selon l'une des revendications 1 à 29, caractérisée en ce que le coulisseau de travail (14) comprend un raccordement d'outil (24) avec une surface plane (149) pour le serrage à surface plane avec un outil de coupe (153), dont l'axe (147) est orienté, à distance de l'axe (12) de la broche, transversalement à ce dernier, et dont la surface plane (149) est disposée parallèlement à un plan médian (151) contenant l'axe (12) de la broche, à distance de celui-ci.

31. Tête d'outil selon la revendication 30, caractérisée en ce que le raccordement d'outil (24) peut être équipé d'un outil de coupe (153) de telle façon que la force de coupe principale (157) apparaissant sur son tranchant (155) lors du surfaçage et du travail en plongée est orientée transversalement à la surface plane (149).

32. Tête d'outil selon l'une des revendications 1 à 31, caractérisée en ce que le coulisseau de travail (14) et le corps de base (10) sont équipés d'une échelle et d'un détecteur pour la mesure directe du déplacement.
